# EUROPÄISCHE PATENTSCHRIFT

(11) **EP 1 379 866 B1**
(45) Veröffentlichungstag und Bekanntmachung des Hinweises auf die Patenterteilung: **05.10.2011**
(21) Anmeldenummer: 01994595.5
(22) Anmeldetag: 07.12.2001
(51) Int. Cl.: G01N 29/26

(54) **PRÜFVORRICHTUNG FÜR DIE ULTRASCHALLPRÜFUNG VON STANGENMATERIAL**
TESTING DEVICE FOR ULTRASONIC BAR TESTING
DISPOSITIF POUR LE CONTROLE PAR ULTRASONS DE BARRES

(30) Priorität: 11.04.2001 DE 10118124
(43) Veröffentlichungstag der Anmeldung: 14.01.2004
(73) Patentinhaber: KRAUTKRÄMER GmbH & Co., D-50354 Hürth (DE)
(72) Erfinder: PRAUSE, Reinhard, 53757 St. Augustin (DE)
(74) Vertreter: Bauer, Wulf
(86) Internationale Anmeldenummer: PCT/DE2001/004600
(87) Internationale Veröffentlichungsnummer: WO 2002/084274

(56) Entgegenhaltungen:
- DE-A- 1 698 138
- DE-A- 19 931 350
- PATENT ABSTRACTS OF JAPAN vol. 009, no. 174 (P-374), 19. Juli 1985 (1985-07-19) & JP 60 049257 A (MITSUBISHI DENKI KK), 18. März 1985 (1985-03-18)

## Beschreibung

Die Erfindung bezieht sich auf eine Prüfvorrichtung für die Ultraschallprüfung von Stangenmaterial nach dem Oberbegriff des Patentanspruchs 1.

Eine Prüfvorrichtung der eingangs genannten Art ist aus der DE 199 31 350 A vorbekannt. Die vorbekannte Prüfvorrichtung hat einen rohrförmigen Behälter mit einem im Wesentlichen zylindrischen Innenraum mit einem runden Querschnitt quer zur Längsrichtung des Stangenmaterials. Dieser Innenraum bildet die Kammer, in der die Ultraschallprüfung stattfindet.

Diese vorbekannte Prüfvorrichtung hat sich für die Prüfung von im Wesentlichen runden Stangenmaterial sehr bewährt. Bei Stangenmaterial mit eckigem Profil, beispielsweise Flachmaterial, Vierkantmaterial, Sechskantmaterial usw. treten jedoch Probleme bei der Ultraschallprüfung auf.

Eine nähere Untersuchung der Probleme hat ergeben, dass die kantigen Materialien schlecht umströmt werden. Je stärker sie von einem runden Profil abweichen, umso schlechter ist die Umströmung. Es ergeben sich Abrisskanten, Bildung von Blasen usw.. Dies stört bei der Ultraschallprüfung.

Hier setzt nun die Erfindung ein. Sie hat es sich zur Aufgabe gemacht, die Prüfvorrichtung der eingangs genannten Art dahingehend weiterzubilden, dass sie auch für die Prüfung kantiger Materialien, also auch für Stangenmaterial mit stark von einem runden Querschnitt abweichendem Profil geeignet ist.

Ausgehend von der Prüfvorrichtung der eingangs genannten Art wird diese Aufgabe gelöst durch die Merkmale des Anspruchs 1.

Bei dieser Prüfvorrichtung ist die Kammer, in der die Ultraschallprüfung stattfindet, nicht mehr für jede Prüfaufgabe und für jedes zu prüfende Stangenmaterial gleich, vielmehr wird sie angepasst auf das Profil des zu prüfenden Stangenmaterials. Hierzu kann entweder jeweils ein dem Stangenmaterial angepasster Behälter, insbesondere ein Mantel des Behälters verwendet werden. Insbesondere wird aber vorgeschlagen, dass Adaptereinsätze vorgesehen sind, die in den Innenraum des Behälters einsetzbar sind und die Größe und Form der Kammer so dem Profil des zu prüfenden Stangenmaterials anpassen, dass ein umlaufender Spalt zwischen dem Stangenmaterial und der Wandung der Kammer seine Breite im wesentlichen nicht ändert. Es hat sich als ausreichend erwiesen, wenn die Breite des Spaltes im Verlauf eines Umlaufes um weniger als 3:1, vorzugsweise weniger als 2:1 variiert.

Durch die Anpassung der Kammer an das jeweilige Stangenmaterial wird eine gezielte und kontrollierte Umströmung des Stangenmaterials erreicht. Die bisher bei Kammern mit kreisförmigem Querschnitt bekannten Probleme lassen sich dadurch vermeiden. Die Prüfung auch solcher Stangen, deren Profil stark von der runden Querschnittsform abweicht, ist möglich. Es lässt sich sogar Flachmaterial gut prüfen.

Bei der Prüfung wird das Stangenmaterial in bekannter Weise relativ zum Behälter und damit relativ zu dem gegenüber dem Behälter ortsfesten, mindestens einen Ultraschallprüfkopf bewegt. Durch diese Bewegung werden nach und nach unterschiedliche Bereiche des zu prüfenden Stangenmaterials abgetastet. Durch geeignete Anordnung mehrerer Ultraschallprüfköpfe wird erreicht, dass das Profil des Stangenmaterials ausreichend geprüft wird, also die jeweilige Prüfaufgabe erfüllt wird.

Damit das Stangenmaterial relativ zum Behälter bewegt werden kann, hat der Behälter mindestens einen Durchlass für das zu prüfende Stangenmaterial, vorzugsweise hat er zwei in Längsrichtung einander gegenüberliegende Durchlässe. Auch diese werden dem jeweiligen zu prüfenden Stangenmaterial angepasst. Sie haben also eine Form, die dem Profil des Stangenmaterials entspricht. Zudem haben sie Dichtungen, die möglichst abdichtend mit der Oberfläche des Stangenmaterials in Kontakt kommen.

Grundsätzlich ist es möglich, dass das Stangenmaterial zusätzlich um seine Längsachse als Achse gedreht wird, wenn es durch den Behälter hindurch bewegt wird. Vorgezogen wird jedoch ein Durchlauf des Stangenmaterials durch den Behälter ohne jegliche Drehung. Die notwendigen Ultraschallprüfungen werden dann durch eine ausreichende Anzahl von Prüfköpfen erreicht, die um das Profil des Stangenmaterials verteilt angeordnet sind und die jeweiligen einzelnen Prüfaufgaben in einem Profilquerschnitt übernehmen.

Als Koppelflüssigkeit wird im wesentlichen Wasser verwendet, grundsätzlich kann aber jede andere Flüssigkeit verwendet werden, beispielsweise auch Öl. Die Koppelflüssigkeit kann beliebig oft wiederverwendet werden, sie kann in einem Kreislauf umlaufen. Gegebenenfalls wird ein Filter in den Kreislauf eingeschaltet, um mitgerissene Schmutzteile usw. auszufiltern. Angetrieben wird der Kreislauf z.B. durch eine Pumpe. Es ist aber auch möglich, ohne Zirkulation zu arbeiten. Dann wird beispielsweise Wasser unter Druck aus einer Versorgungsleitung entnommen, durchläuft die Prüfvorrichtung und wird dann abgeführt.

Weitere Vorteile und Merkmale der Erfindung ergeben sich aus den übrigen Ansprüchen sowie der nun folgenden Beschreibung nicht einschränkend zu verstehender Ausführungsbeispiele der Erfindung, die im folgenden unter Bezugnahme auf die Zeichnung näher erläutert werden. In dieser Zeichnung zeigen:
Fig. 1: Einen Längsschnitt durch eine Prüfvorrichtung und durch ein geprüftes Stangenmaterial, das durch diese Prüfvorrichtung hindurchläuft,
Fig. 2: einen Schnitt entlang der Schnittlinie II-II in Fig. 1,
Fig. 3: ein Schnittbild wie Fig. 2, jedoch für ein Stangenmaterial mit einem quadratischen Profil und mit einem anderen Adaptereinsatz als in Fig. 1 und Fig. 2,
Fig. 4: ein Schnittbild ähnlich Fig. 2 mit einem Adaptereinsatz, der an seiner Außenwand einen zylindrischen Kanal freilässt, und
Fig. 5: einen perspektivisch ausgestalteten Querschnitt durch eine Prüfvorrichtung mit unrundem Mantel.

Die Prüfvorrichtung für Ultraschallprüfung von Stangenmaterial hat einen Behälter 20, der in den gezeigten Ausführungsbeispielen jeweils aus einem Mantel 22 und zwei Stirnteilen 24, 26 aufgebaut ist. Grundsätzlich ist ein derartiger Aufbau nicht zwingend. Der Behälter kann beliebige Form und Ausbildung aufweisen.

Im gezeigten Ausführungsbeispiel sind die Stirnteile 24, 26 baugleich. Sie haben jeweils einen mittig angeordneten Durchlass 28. Dieser erlaubt es, zu prüfendes Stangenmaterial 30 in den Behälter 20 ein- und aus ihm herauszuführen. Das Stangenmaterial hat eine Längsrichtung 32. Sie verläuft auf der Linie des Flächenschwerpunktes des Querschnitts des Stangenmaterials 30.

In der gezeigten Ausbildung ist der Mantel 22 ein zylindrischer Mantel. Grundsätzlich können aber auch andere Mantelformen verwendet werden, beispielsweise quadratische Mäntel. Die Stirnteile 24, 26 sind der Mantelform angepasst. In der gezeigten Ausführung sind es Kreisscheiben, die dichtend mit dem Rand des zylindrischen Mantels 22 zusammengesetzt sind. Sie können vom Mantel 22 getrennt werden, sodass der volle Querschnitt des Mantels seitlich frei wird. Die Stirnteile 24, 26 setzen sich vorzugsweise aus zwei Teilstücken zusammen, wie aus der o.g. DE 199 31 350 bekannt ist.

Die Stirnteile 24, 26 können einfach ausgetauscht werden. Es sind unterschiedliche Sätze von Stirnteilen 24, 26 vorgesehen. Jeweils für einen zu prüfenden Profilquerschnitt des Stangenmaterials 30 sind unterschiedliche Stirnteile 24, 26 vorgesehen. Sie unterscheiden sich im Durchlass 28. Der Durchlass 28 ist dem Profil des zu prüfenden Stangenmaterials 30 angepasst. Er hat Dichtungen 34, die so angeordnet sind, dass sie auf der Oberfläche des Stangenmaterials entlangschleifen, wenn dieses in Richtung des Pfeils 36 durch die Prüfvorrichtung bewegt wird. Es ist möglich und vorgesehen, ein Stirnteil mit einer größeren mittigen Öffnung auszubilden und in diese unterschiedliche Passstücke einzusetzen, die jeweils an die Profilform des Stangenmaterials angepasst sind und die Dichtungen tragen.

Im Behälter 20 befindet sich ein Adaptereinsatz 38. Er hat von außen gesehen die Form eines Zylinders. Er passt in den Innenraum des Mantels 22 hinein und reicht von der Innenfläche des einen Stirnteils 24 zur Innenfläche des anderen Stirnteils 26. Er hat eine Ausnehmung, die sich in Längsrichtung 32 erstreckt und die quer zur Längsrichtung durch eine Wandung 40 begrenzt wird. In der beschriebenen Ausführung hat der Adaptereinsatz 38 über seine gesamte axiale Länge denselben Querschnitt. Es ist aber auch möglich, dass sich der Querschnitt von einem Endbereich des Adaptereinsatzes 38 hin zum anderen verjüngt.

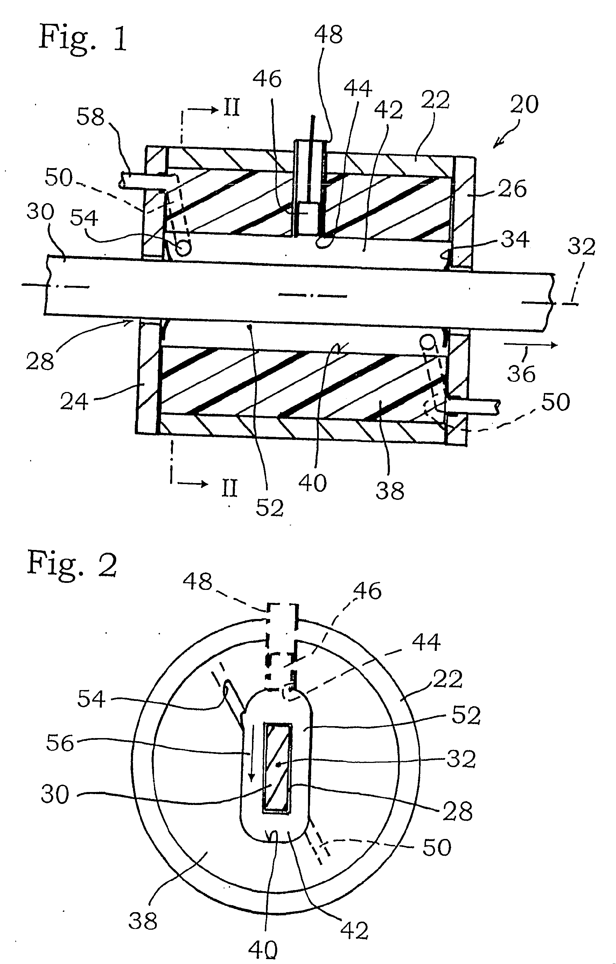

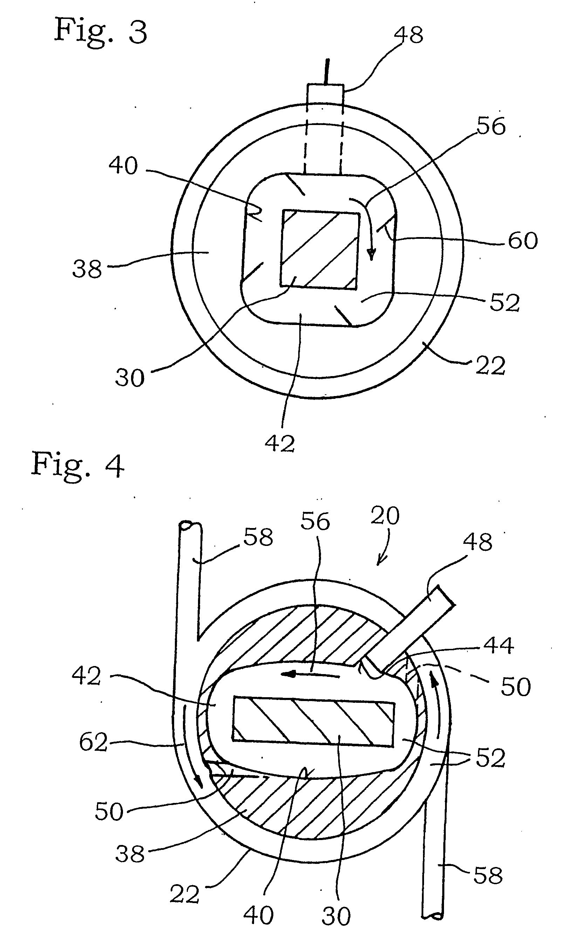

Die Ausnehmung ist in ihrem Profil dem Profil des Stangenmaterials 30 angepasst. Unterschiedliche Adaptereinsätze 38 unterscheiden sich durch die Form der Ausnehmung, also den Verlauf der Wandung 40. Beispiele sind in den Figuren 2 und 3 gegeben.

Wie Figur 2 zeigt, ist der Querschnitt der Ausnehmung im wesentlichen ein Rechteck mit gerundeten Ecken. Zwischen dem Profil des Stangenmaterials 30 und der Wandung 40 des Adaptereinsatzes 38 bleibt eine Kammer bzw. ein Spalt 42 frei. Er wird auch als "umlaufender" Spalt bezeichnet, weil er bei einem kompletten Umlauf um das Profil des Stangenmaterials 30 vorliegt. Dieser Spalt 42 hat in einer Richtung quer zur Längsrichtung 32 eine Breite. Diese Breite des Spaltes 42 ändert sich bei einem Umlauf um das Stangenmaterial 30 möglichst wenig. Jedenfalls wird sie so gewählt, dass eine gleichmäßige Umströmung des Profils des Stangenmaterials erreicht wird. Als Kammer wird der von der Wandung eingeschlossene Raum bezeichnet.

Wie aus den Figuren ersichtlich ist, hat der Adaptereinsatz 38 mindestens eine Aussparung 44, die sich von seiner inneren Wandung 40 bis nach außen zu seinem Außenmantel hin erstreckt. Sie fluchtet mit einer Bohrung im Mantel 22 und nimmt einen Ultraschallprüfkopf 46 auf, der in ihrer Längsrichtung positioniert werden kann. Konkret in der gezeigten Ausführung ist der Ultraschallprüfkopf in einem Rohr 48 untergebracht, das in der Aussparung 44 und der Bohrung verschoben werden kann. Auf diese Weise kann der mit dem Rohr verbundene Ultraschallprüfkopf in Richtung der Achse des Rohres 48 verschoben werden. Er kann insbesondere ganz aus dem Behälter 20 entfernt werden. Er kann in jeder beliebigen Position in der Aussparung 44 fixiert werden, hierzu ist eine geeignete, nicht dargestellte Haltevorrichtung zwischen Rohr 48 und Mantel 22 vorgesehen. Im Rohr sind auch die elektrischen Zuleitungen des Ultraschallprüfkopfes 46 untergebracht.

Bei einem Austausch eines Adaptereinsatzes 38 wird das Rohr 48 so weit nach außen gezogen, dass es von der Ausnehmung 44 freikommt. Es behindert dann nicht mehr die axiale Entnahme des Adaptereinsatzes 38. Für diese Entnahme wird ein Stirnteil 24 entfernt.

Weiterhin sind im Adaptereinsatz 38 Führungskanäle 50 für die Zufuhr und die Abfuhr einer Koppelflüssigkeit 52 vorgesehen, die im Betrieb den Spalt 42 zwischen Wandung 40 und Stangenmaterial 30 füllt. In der gezeigten Ausführung ist jeweils ein Führungskanal 50 für die Zufuhr und ein Führungskanal 50 für die Ableitung vorgesehen. Es können aber auch mehrere Führungskanäle für die Zufuhr und/oder die Abfuhr vorgesehen sein.

Im gezeigten Ausführungsbeispiel geht der Führungskanal 50 für den Zulauf der Koppelflüssigkeit 52 in Nähe des Spaltes 42 in eine Düse 54 über. Diese ist im wesentlichen tangential, also in Umlaufrichtung des Spaltes 42 angeordnet, verwiesen wird auf den umlaufenden Peil 56, der die Umströmung des Stangenmaterials 30 durch die Koppelflüssigkeit 52 symbolisiert. Die schraubenlinienförmige Umströmung wird dadurch erreicht, dass durch die Düse 54 unter Druck Koppelflüssigkeit 52 eintritt, sodass die Umströmung im Sinne des umlaufenden Pfeils 56 erzwungen wird.

Die Düse 54 und damit der Zulauf befindet sich in einem axialen Endbereich des Behälters 20. Am anderen axialen Endbereich befindet sich der Führungskanal 50 für den Ablauf. Wie das Ausführungsbeispiel zeigt, sind die Führungskanäle 50 so geführt, dass sie an den Stirnflächen des Adaptereinsatzes 38 münden. Dort gehen sie über eine Steckkupplung über in Leitungen 58, die durch die Stirnteile 24 bzw. 26 geführt sind. Über diese Leitungen 58 erfolgt das Einspeisen bzw. erfolgt die Entnahme der Koppelflüssigkeit 52.

In einer unterschiedlichen Ausbildung sind die Leitungen durch den Mantel 22 geführt.

Unabhängig hiervon ist die Anordnung der Leitungen 58 jeweils so, dass für alle möglichen Adaptereinsätze 38 jeweils dieselbe Position der Leitungen 58 möglich ist. Es unterscheiden sich unterschiedliche Adaptereinsätze 38 im wesentlichen nur durch die Form ihrer inneren, axialen Ausnehmung, also den Verlauf der Wandung 40. Hierin liegt auch der Unterschied zwischen Fig. 2 und Fig. 3. Während bei Fig. 2 das zu prüfenden Stangenmaterial 30 im wesentlichen ein Flachmaterial mit Rechteckquerschnitt ist, hat das zu prüfende Stangenmaterial 30 in Fig. 3 quadratischen Querschnitt. Entsprechend ist die Ausnehmung im Adaptereinsatz 38 anders ausgeführt. Sie ist im Querschnitt ebenfalls etwa quadratisch mit abgerundeten Ecken. Ebenfalls abgerundete Ecken liegen auch gemäss Fig. 2 vor. Durch geeignete Formgebung des Profils der Ausnehmung wird die gewünschte Umströmung erreicht. Wie Fig. 3 zeigt, sind zusätzliche Rippen 60 vorgesehen, die von der Wandung 40 nach innen in die Kammer vorspringen. Sie sind in Richtung des umlaufenden Pfeils 56 geneigt. Sie sind in Pfeilrichtung dieses Pfeils 56 jeweils hinter einer umströmten Kante angeordnet und bewirken ähnlich einem Spoiler das Andrücken der Strömung an den Bereich hinter der Abrisskante.

Andere Mittel zum Erreichen einer gleichmäßigen und möglichst vollständigen Umströmung des jeweils zu prüfenden Querschnitts des Stangenmaterials 30 können Verwendung finden. So können anstelle der Rippen 60 Vorsprünge eingesetzt werden, die die Breite des Spaltes 42 an bestimmten Stellen des Umlaufes verringern usw..

Typischerweise ist nicht nur ein Ultraschallprüfkopf vorgesehen, sondern sind mehrere Ultraschallprüfköpfe 46 bei einer Prüfaufgabe im Einsatz. Da für unterschiedliche Profile des Stangenmaterials 30 unterschiedliche Positionierungen notwendig sind, ist im Mantel 42 eine größere Anzahl von Bohrungen für Prüfköpfe vorgesehen. Nicht bei jedem Adaptereinsatz 38 passt zu jeder Bohrung eine Aussparung 44. Es müssen für eine Prüfaufgabe auch nicht alle Aussparungen 44 bzw. Bohrungen verwendet werden. Nicht verwendete Bohrungen werden durch geeignete Verschlussstopfen einfach verschlossen.

In der Ausführung nach Fig. 4 hat der Adaptereinsatz 38 an seinem Außenmantel einen Abstand von der Innenfläche des Mantels 22 des Behälters 20. Dadurch wird hier ein ringzylindrischer Hohlraum geschaffen und in diesem eine umlaufende Strömung entsprechend dem Pfeil 62 möglich. Die Leitungen 58 sind so angeordnet, dass diese Strömung erzwungen wird. Die Führungskanäle 50 sind nun so angeordnet, dass die äußere, umlaufende Strömung entsprechend dem Pfeil 62 in die Kammer eintreten und aus ihr heraustreten kann. Auf diese Weise ist es möglich, die Leitungen 58 ungeändert zu lassen, wenn Adaptereinsätze 38 ausgetauscht werden. Die Adaptereinsätze werden jeweils so ausgebildet, dass sich die gewünschte Umströmung entsprechend dem Pfeil 56 in der Kammer 42 ergibt.

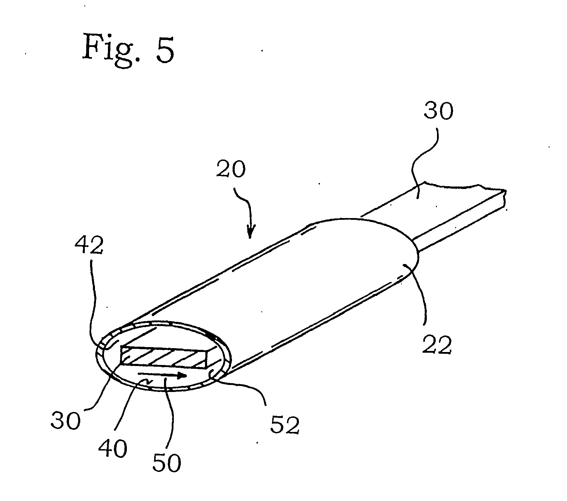

Fig. 5 schließlich zeigt ein Ausführungsbeispiel, bei dem die Form der Kammer 42 nicht durch spezielle Adaptereinsätze 38 verändert wird, sondern jeweils zumindest der Mantel 22 ausgetauscht wird. Dabei sind unterschiedliche Mäntel 22 für unterschiedliche Stangenmaterialien 30 vorgesehen. In der praktischen Ausführung geschieht dies so, dass im Grunde die Adaptereinsätze der vorhergehend besprochenen Ausführungsbeispiele im Prinzip verwendet werden, diese aber so weitergebildet und ausgeführt sind, dass sie auch (zusammen mit den Stirnteilen) die Abdichtfunktion gewährleisten, die in den vorhergehenden Ausführungsbeispielen der Mantel in Zusammenwirkung mit den Stirnteilen übernommen hatte. In der Ausbildung nach Fig. 5 ist der Mantel 22, der eine Ausbildung wie die unterschiedlichen Adaptereinsätze 38 haben kann, aber auch aus einem Blech oder anderem Material mit überall gleicher Wanddicke geformt sein kann, abdichtend mit den Stirnteilen 24, 26 lösbar verbunden. Es können für jeden einzelnen Mantel 22 spezielle Stirnteile vorgesehen sein, es können aber auch universell einsetzbare Stirnteile, die mit verschiedenen Mänteln zusammenwirken, benutzt werden. Die Ausbildung der Kammer wird dabei nicht beeinflusst.

## Patentansprüche

1. Prüfvorrichtung für die Ultraschallprüfung von Stangenmaterial (30) mit
- einem Behälter (20), a) in dem sich eine Kammer befindet, in welcher die Ultraschallprüfung stattfindet, der b) mindestens einen Durchlass (28) für zu prüfendes Stangenmaterial (30) hat, der eine Form hat, die dem zu prüfenden Stangenmaterial (30) angepasst ist, und der c) mindestens einen Zulauf und mindestens einen Ablauf für eine Koppelflüssigkeit (52), insbesondere Wasser, aufweist, wobei Zulauf und Ablauf so angeordnet sind, dass im Betrieb die Koppelflüssigkeit (52) das Stangenmaterial (30) quer zu seiner Längsrichtung (32) umströmt, und
- mit mindestens einem Ultraschallprüfkopf (46), der auf das Stangenmaterial (30) gerichtet ist,
**dadurch gekennzeichnet, dass** für die Prüfung von Stangenmaterial mit unrundem Querschnitt die Kammer einen unrunden Querschnitt quer zur Längsrichtung (32) des Stangenmaterials (30) aufweist, dass der unrunde Querschnitt der Kammer dem Profil des Stangenmaterials (30) so angepasst ist, dass ein umlaufender Spalt (42) zwischen Stangenmaterial (30) und der Wandung (40) der Kammer seine Breite im Wesentlichen beibehält, und dass die Form des Durchlasses (28) unrund ist.

2. Prüfvorrichtung nach Anspruch 1, **dadurch gekennzeichnet, dass** die Breite des Spaltes (42) bei einem Umlauf weniger variiert als 3:1, vorzugsweise weniger als 2:1.

3. Prüfvorrichtung nach Anspruch 1, **dadurch gekennzeichnet, dass** die Kammer begrenzt wird durch einen Adaptereinsatz (38) und dass der Adaptereinsatz (38) austauschbar im Behälter (20) angeordnet ist.

4. Prüfvorrichtung nach Anspruch 3, **dadurch gekennzeichnet, dass** eine Vielzahl von unterschiedlichen Adaptereinsätzen für unterschiedliche Profile zu prüfenden Stangenmaterials (30) vorgesehen ist.

5. Prüfvorrichtung nach Anspruch 3, **dadurch gekennzeichnet, dass** der Adaptereinsatz (38) Führungskanäle (50) für die Zuleitung und die Ableitung von Koppelflüssigkeit (52) in und aus der Kammer aufweist, die mit dem mindestens einen Zulauf bzw. dem mindestens einen Ablauf kommunizieren.

6. Prüfvorrichtung nach Anspruch 3, **dadurch gekennzeichnet, dass** der Behälter (20) einen Mantel (22) und zwei Stirnteile (24, 26) aufweist, dass mindestens ein Stirnteil (24) lösbar mit dem Mantel (22) verbunden ist und dass die Adapterteile bei entnommenem Stirnteil (24) ausgetauscht werden können.

7. Prüfvorrichtung nach Anspruch 3, **dadurch gekennzeichnet, dass** die Adapterteile eine Außenwand aufweisen, dass ein im Behälter (20) eingesetztes Adapterteil zwischen seiner Außenwand und einer Innenwand des Behälters (20) einen ringförmig umlaufenden Bereich freilässt und dass dieser mit dem ringförmig umlaufende Spalt (42) kommuniziert und Koppelflüssigkeit (52) aufnimmt.

8. Prüfvorrichtung nach Anspruch 1, **dadurch gekennzeichnet, dass** der mindestens eine Zulauf so im Behälter (20) angeordnet ist, dass aus ihm austretende Koppelflüssigkeit (52) eine tangentiale Bewegungskomponente aufweist.

9. Prüfvorrichtung nach Anspruch 3, **dadurch gekennzeichnet, dass** der Querschnitt der Kammer durch Rundungen begrenzt ist, jedenfalls keine Ecken aufweist.

## Claims

1. Testing device for the ultrasonic inspection of bar stock (30), comprising
- a container (20) a) in which a chamber is disposed in which the ultrasonic inspection takes place, b) which is provided with at least one passage (28) for bar stock (30) to be inspected the passage having a shape adapted to the bar stock (30) to be inspected, and c) which comprises at least one inlet and at least one outlet for a coupling liquid (52), in particular water, the inlet and outlet being arranged in such a manner that in operation the coupling liquid (52) circulates around the bar stock (30) in a direction transverse to the longitudinal direction (32) thereof, and
- with at least one ultrasonic probe (46) that is directed towards the bar stock (30),
**characterised in that**, for the inspection of bar stock with a non-circular cross section, the chamber has a non-circular cross section in a direction transverse to the longitudinal direction (32) of the bar stock (30), that the non-circular cross section of the chamber is matched to the profile of the bar stock (30) in such a manner that a peripheral gap (42) between the bar stock (30) and the wall (40) of the chamber substantially maintains its width, and that the shape of the passage (28) is non-circular.

2. Testing device according to claim 1, **characterised in that** the width of the gap (42) along the periphery varies less than 3: 1, preferably less than 2:1.

3. Testing device according to claim 1, **characterised in that** the chamber is delimited by an adapter insert (38) and that the adapter insert (38) is replaceably disposed in the container (20).

4. Testing device according to claim 3, **characterised in that** a plurality of different adapter inserts for different profiles of the bar stock (30) to be inspected is provided.

5. Testing device according to claim 3, **characterised in that** the adapter insert (38) has guide channels (50) for feeding to, and discharging from, the chamber the coupling liquid (52), which communicate with the at least one inlet or the at least one outlet, respectively.

6. Testing device according to claim 3, **characterised in that** the container (20) has a jacket (22) and two end portions (24, 26), that at least one end portion (24) is removably connected to the jacket (22) and that the adapter pieces can be replaced when the end portion (24) is removed.

7. Testing device according to claim 3, **characterised in that** the adapter pieces have an outer wall, that an adapter piece inserted in the container (20) leaves free an annular peripheral region between its outer wall and an inner wall of the container (20), and that this region communicates with the annular peripheral gap (42) and receives coupling liquid (52).

8. Testing device according to claim 1, **characterised in that** the at least one inlet is disposed in the container (20) in such a manner that coupling liquid (52) escaping from it has a tangential component of motion.

9. Testing device according to claim 3, **characterised in that** the cross section of the chamber is delimited by curves, in any case has no angles.

## Revendications

1. Dispositif de contrôle destiné au contrôle par ultrasons de barres (30), comprenant
- un réservoir (20) a) à l'intérieur duquel est située une chambre dans laquelle s'effectue le contrôle par ultrasons, qui b) présente au moins un passage (28) pour des barres (30) à contrôler qui a une forme adaptée aux barres (30) à contrôler, et qui c) comprend au moins une amenée et au moins une sortie pour un liquide de couplage (52), en particulier de l'eau, lesdites amenée et sortie étant agencées de manière à ce que, en fonctionnement, le liquide de couplage (52) s'écoule autour des barres (30) transversalement à leur direction longitudinale (32), ainsi que
- au moins un palpeur à ultrasons (46) qui est orienté en direction des barres (30),
**caractérisé par le fait que**, pour le contrôle de barres ayant une section transversale non ronde, ladite chambre présente une section transversale non ronde transversalement à la direction longitudinale (32) des barres (30), que la section transversale non ronde de la chambre est adaptée au profil des barres (30) de manière à ce que la largeur d'une fente périphérique (42) située entre les barres (30) et la paroi (40) de la chambre reste pour l'essentiel inchangée, et que la forme dudit passage (28) est non ronde.

2. Dispositif de contrôle selon la revendication 1, **caractérisé par le fait que**, dans une révolution, la largeur de la fente (42) varie de moins de 3 : 1, de préférence de moins de 2 : 1.

3. Dispositif de contrôle selon la revendication 1, **caractérisé par le fait que** ladite chambre est délimitée par un insert adaptateur (38) et que ledit insert adaptateur (38) est disposé de manière échangeable dans ledit réservoir (20).

4. Dispositif de contrôle selon la revendication 3, **caractérisé par le fait qu'**une pluralité d'inserts adaptateurs différents pour des profils différents de barres (30) à contrôler est prévue.

5. Dispositif de contrôle selon la revendication 3, **caractérisé par le fait que** ledit insert adaptateur (38) comprend des canaux de guidage (50) pour l'amenée et l'évacuation de liquide de couplage (52) à ladite chambre et hors de celle-ci, qui communiquent avec ladite au moins une amenée ou bien avec ladite au moins une sortie.

6. Dispositif de contrôle selon la revendication 3, **caractérisé par le fait que** ledit réservoir (20) présente une nappe (22) ainsi que deux parties frontales (24, 26), qu'au moins une partie frontale (24) est reliée de manière amovible à ladite nappe (22) et que les parties adaptatrices peuvent être échangées lorsque la partie frontale (24) est retirée.

7. Dispositif de contrôle selon la revendication 3, **caractérisé par le fait que** les parties adaptatrices présentent une paroi extérieure, qu'une partie adaptatrice insérée dans ledit réservoir (20) ménage une zone périphérique annulaire entre sa paroi extérieure et une paroi intérieure du réservoir (20) et que celle-ci communique avec ladite fente (42) périphérique annulaire et reçoit du liquide de couplage (52).

8. Dispositif de contrôle selon la revendication 1, **caractérisé par le fait que** ladite au moins une amenée est agencée dans ledit réservoir (20) de manière à ce que du liquide de couplage (52) sortant de celle-ci présente une composante de mouvement tangentielle.

9. Dispositif de contrôle selon la revendication 3, **caractérisé par le fait que** la section transversale de ladite chambre est délimitée par des arrondis, en tout cas ne présente pas d'angles.
